# EUROPÄISCHE PATENTSCHRIFT

(11) **EP 1 166 591 B1**
(45) Veröffentlichungstag und Bekanntmachung des Hinweises auf die Patenterteilung: **01.03.2006**
(21) Anmeldenummer: 99973814.9
(22) Anmeldetag: 17.11.1999
(51) Int. Cl.: H04Q 7/38

(54) **VERFAHREN ZUM KOMBINIEREN VON FESTNETZ- UND MOBILFUNKTELEFONIE**
METHOD OF COMBINING FIXED-NETWORK TELEPHONE AND MOBILE RADIO TELEPHONE COMMUNICATIONS
PROCEDE POUR COMBINER LA TELEPHONIE SUR RESEAU FIXE ET LA RADIOTELEPHONIE MOBILE

(30) Priorität: 07.04.1999 DE 19915548
(43) Veröffentlichungstag der Anmeldung: 02.01.2002
(73) Patentinhaber: E-Plus Mobilfunk GmbH & Co. KG, 12349 Berlin (DE)
(72) Erfinder: SCHWARZ, Holger, CH-8121 Benglen (CH)
(74) Vertreter: Beyer, Rudi
(86) Internationale Anmeldenummer: PCT/EP1999/008837
(87) Internationale Veröffentlichungsnummer: WO 2000/062568

(56) Entgegenhaltungen:
- WO-A-96/31073
- WO-A-97/23988
- WO-A-98/43454
- DE-A- 4 343 335
- "Ein Telefon und eine Rufnummer für zuhause und unterwegs" INTERNET, [Online] 18. März 1999 (1999-03-18), XP002134924 Retrieved from the Internet: <URL:http://www2.viaginterkom.de/aps/press e/mitteilungen/news00441.html> [retrieved on 2000-04-04]

## Beschreibung

### Gattung

Die Erfindung betrifft ein Verfahren zum Kombinieren von Festnetz- und Mobilfunktelefonie.

### Stand der Technik

Mobilfunktelefonie und Festnetztelefonie werden zur Zeit als zwei völlig getrennte Produkte angeboten. Deshalb erhält der Kunde auch getrennte Telefonnummern, die er in den unterschiedlichen Netzen mit verschiedenen Telefonen auch benutzen muß.

Des weiteren werden dem Kunden in beiden Netzen unterschiedliche Tarife angeboten. Dies hat zur Folge, daß der Kunde, wenn er sich zum Beispiel zu Hause befindet, basierend auf diesen Tarifen für abgehende Gespräche entscheiden muß, ob er das Festnetz oder das Mobilfunknetz benutzen will.

Dem potentiellen Anrufer müssen zwei Telefonnummern bekannt gegeben werden, wobei jeder Telefonnummer im allgemeinen ein eigener Anrufbeantworter zugeordnet ist Hierdurch werden Bedienung und Nutzung der Telekommunikationsdienstleistungen kompliziert.

Bei Mehrpersonenhaushalten kommt erschwerend hinzu, daß bei analogen Teilnehmeranschlüssen nur eine einzige Rufnummer zur Verfügung steht Demgegenüber geht im Mobilfunk der Trend zur Personalisierung der Rufnummern.

Zur transparenten Nutzung von Festnetz und Mobilfunk hat der Kunde heute erste rudimentäre Ansätze, die im wesentlichen auf der Rufumleitung - Call Forward - basieren. Zur Erläuterung möge ein Beispiel dienen:
1. Der Kunde setzt für seine Mobilfunknummer eine Rufumleitung bei nicht Erreichbarkeit auf eine Festnetznummer. An den Festnetzanschluß ist ein Anrufbeantworter geschaltet
2. Der Kunde setzt für seine Festnetznummer eine Rufumleitung bei nicht Erreichbarkeit auf seine Mobilfunknummer. Für die Mobilfunknummer ist für nicht Erreichbarkeit eine Rufumleitung auf den Anrufbeantworter im Mobilfunknetz geschaltet.

Hieraus ergeben sich einige gravierende Nachteile:
1. Die Administrierung der Rufumleitung für die beiden Netze muß getrennt erfolgen.
2. Die Rufumleitung kann nur über das jeweilige Endgerät (Festnetzapparat für Festnetzrufnummer und Mobiltelefon für Mobilfunknummer) verändert werden.

Die Z. Mosimann, D. et al.: Mobilität in privaten Telekommunikationsnetzwerken (PTN) in: tec 3/95 Das technische Magazin von ascom, Seiten 14-20 beschreibt ein GSM-PTN Interworking, zum Beispiel den interaktiven Austausch von Aufenthaltsinformationen. Außerdem wird das sogenannte "Least Cost Routing" im Handapparat beschrieben und sogenannte DECT-Basis-Stationen erwähnt, ohne aber deren Funktionsweise näher zu beschreiben.

In dem Aufsatz von Krampe, M.: "Keep it simple" in: NET 8-9/98, Jahrgang 52, Seiten 42 - 44 wird das sequentielle Suchen im Zusammenhang mit der persönlichen Rufnummer beschrieben. Auch werden Änderungen der Dienstdaten über das WEB erwähnt.

Aus Sattig, T.: Fallen für Pfennigfuchser in: Telekommunikation 3/1999, Jahrgang 49, Seiten 20 - 21 ist das sogenannte "Least Cost Routing" im TK-Bereich vorbekannt Als Zugangsnetz wird ausschließlich das Festnetz benutzt. Least Cost Routing erfolgt durch Auswahl des Verbindungsnetzbetreibers.

Gneiting, S.: Mobilfunk & Festnetz wachsen zusammen in: Funkschau 17/98, Seiten 24- 29, beschreibt unter anderem die sequentielle Suche im D2-Netz, die händische Weiterleitung im FIDO Netz durch ein Familienmitglied sowie Dual-Mode-Endgeräte bei der DTAG und BT.

Aus der GB 23 15 191 A ist das Call Forward, basierend auf einer selbstlernenden "behaviour" Database vorbekannt, die zum Beispiel Tag/Uhrzeit bei der Auswertung von erfolgreichen und erfolglosen Call Forward-Versuchen berücksichtigt.

Aus der WO 97/26748 A1 ist das parallele Anrufen (teilweise auch mit Zeitversatz) bei mehreren Zielrufnummern vorbekannt, mit dem primären Ziel ein Konferenzcall aufzusetzen. Eine Identifikation des gerufenen Teilnehmers über PIN oder Voice ist zusätzlich vorgesehen. In diesem Zusammenhang werden Verfahrensweisen zum Listehmanagement detailliert beschrieben.

Die 43 43 543 A1 beschreibt in der Vermittlungsstelle einen Sprachserver, der vor einer Rufumleitung vom Anrufer abfragt, ob die Umleitung erwünscht ist Falls das nicht der Fall ist, erfolgt eine Verbindung mit einem Anrufbeantworter.

Aus der US 57 64 741 A ist das Least Cost Routing (LCR) zur optimierten Auswahl von Verbindungsnetzbetreibern vorbekannt

Des weiteren beschreibt Willimowski, L: FMC - jetzt wächst zusammen, was zusammengehört in: IK Berlin 48 (1998) 3, Seiten 32-35, relativ unspezifisch Dienste der Fixed Mobile Convergence. Gruppen- bzw. Sammelnummerfunktionen werden nicht beschrieben.

Aus "Ein Telefon und eine Rufnummer für zuhause und unterwegs", Internet, Online! 18. März 1999 (1999-03-18), XPOO2134924, Retrieved from the Internet URL:http://www2.viaginterkom.de/aps/presse/mitteilungen/news00441.html retrieved on 2000-04-04! ist eine Homezone-Lösung vorbekannt, die ausschließlich auf dem Funknetz basiert, wobei eine individuelle Prüfung der Qualität durch Interkom erfolgt. Hierbei wird ein sogenannter Anrufmanager beschrieben, der bei Nichterreichbarkeit unter der Festnetznummer eine Weiterleitung auf den Anrufbeantworter oder das Mobile ermöglicht.

DE 43 43 335 A offenbart die einheitliche Nummernwahl für abgehende Gespräche. Abhängig vom Netz, in dem sich der Kunde gerade aufhält (mobil, zellulär), werden die gewählten Ziffern angepaßt. Für ankommende Gespräche wird im Festnetz (Nebenstellenanlage) ein Detektionsmechanismus vorgesehen, der die Verfügbarkeit des Teilnehmers an der TK-Anlage anzeigt Abhängig davon wird umgeleitet

Aus der WO 98/43454 A sind netzwerkseitige Methoden zur Optimierung des Routing vorbekannt

Die WO 96/31073 A beschreibt technische Methoden, wie eine Vielzahl von Teilnehmern mit einer Vielzahl von Mobiltelefonen unter einer einzigen Rufnummer erreichbar sind. Dies ist eine spezielle Realisation eines sogenannten Hunting Mechanismus.

Schließlich ist es aus der WO 97 23988 A vorbekannt, Service-Einstellungen nutzerseitig entweder per Telefon, Tastatur oder per Datenkommunikation zu verändern.

### Aufgabe

Der Erfindung liegt die Aufgabe zugrunde, bei großer Einfachheit für den Kunden ein Verfahren zum Kombinieren von Festnetz- und Mobilfunktelefonie bereitzustellen, mit dem sich auch im Bedarfsfalie eine bemerkenswerte Kostenersparnis für den Kunden erzielen läßt.

### Lösung

Die Aufgabe wird durch die in Patentanspruch 1 wiedergegebenen Merkmale gelöst

### Weitere Ausführungsformen

Weitere vorteilhafte und erfinderische Verfahrensweisen sind in den Patentansprüchen 2 bis 5 beschrieben.

### Einige Vorteile

Durch das erfindungsgemäße Verfahren wird eine transparente Nutzung der in Anspruch genommenen Netze ermöglicht. Zum einen ist die Erreichbarkeit unter nur einer einzigen Nummer mit einem einzigen Endgerät mit automatischer Netzwahl abgehender Gespräche gegeben, wo automatisch das jeweils günstigste verfügbare Netz in Anspruch genommen wird.

Ein weiterer Vorteil besteht darin, daß nur ein einziger Anrufbeantworter für Festnetz und Mobilfunknetz erforderlich wird.

Auch die Administrierung des Kombinationsproduktes, bestehend aus Festnetz und Mobilfunktelefonie, ist unabhängig von dem benutzten Netzzugang erleichtert.

Das erfindungsgemäße Verfahren kombiniert somit Dual-Mode-Endgeräte mit einem persönlichen Erreichbarkeitsdienst. Neben der persönlichen Rufnummer der einzelnen Teilnehmer wird erfindungsgemäß eine einzige Familiensammelnummer oder dergleichen vorgesehen.

Das jeweils zum Einsatz kommende Dual-Mode-Telefon arbeitet in zwei Modi, nämlich im Cordless Mode und im Cellular Mode.

Damit der Nutzer jederzeit bei Bedarf unter einer einzigen Telefonnummer erreichbar ist, ist ein intelligenter "Follow me"-Service (Personal Addressing Service) vorgesehen. Hierdurch wird sichergestellt, daß der Nutzer jederzeit sowohl unter seiner Festnetztelefonnummer als auch unter seiner Mobilfunktelefonnummer erreichbar ist. Der Nutzer kann dabei frei wählen, mit welcher Nummer er kommunizieren möchte. In Mehrpersonenhaushalten mit analogem Tefefonanschluß, das heißt nur einer einzigen Festnetzrufnummer, übernimmt die Rufnummer des Festnetzanschlusses die Funktion der Familienrufnummer. Bei ISDN-Anschlüssen mit mehreren Rufnummern kann die einzelne Festnetzrufnummer bei Bedarf eine Gruppennummernfunktion übemehmen.

Für abgehende Telefongespräche wird bei dem vorgestellten Konzept in der Heimatzelle zum Festnetztarif und im Mobilfunknetz zum Mobilfunktarif telefoniert.

Bei ankommenden Telefongesprächen entscheidet der "Personal Addressing Service" über den aktuell gültigen Tarif und übermittelt ihn an das Ursprungsnetz. Abhängig von den Fähigkeiten des Ursprungsnetzes können Teile des Service gesperrt werden bzw. zu Lasten des Angerufenen ausgeführt werden.

Soweit in den Unterlagen von "Dual-Mode-Geräten" gesprochen wird, bedeutet dies, daß das betreffende Telefon sowohl in einem Cellular Mode als auch in einem Cordless Mode arbeiten kann. Der Cordless Mode hat Vorrang vor dem Cellular Mode, das heißt der Nutzer kommuniziert, wann immer möglich, über seinen Festnetzanschluß. Dies hat für den Nutzer im allgemeinen einen Preisvorteil und entlastet das Mobilfunknetz.

Eine Cordless-Station wird an das Festnetz angeschlossen. Die Cordless-Station bildet die Heimatzelle.

Mit dem "Personal Addressing Service" ist der Nutzer selbst dann unter seiner Mobilfunknummer erreichbar, wenn die Mobilfunkversorgung in Gebäuden nicht vorhanden ist oder in dem betreffenden Gebiet keine Mobilfunkversorgung zur Verfügung steht.

Wenn sich das Dual-Mode-Gerät in den Bereich der Cordless-Station bewegt, wird dies von dem Gerät automatisch erkannt Das Gerät bucht sich, wenn möglich, (Funkversorgung) im Mobilfunknetz aus und in die Cordless-Station automatisch ein.

Bewegt sich das Dual-Mode-Gerät aus dem Bereich der Cordless-Station heraus, wird dies von dem Gerät ebenfalls automatisch erkannt. In diesem Fall bucht sich das Gerät (so bald wie möglich) wieder in das Mobilfunksystem ein.

Die Cordless-Station ist als Option multilinkfähig. Das heißt, eine Cordless-Station kann mehrere Endgeräte bedienen. Dies ist besonders interessant für Mehrpersonenhaushalte.

Wie bereits ausgeführt wurde, kann bei Bedarf der Nutzer entweder über seine Mobilfunknummer oder über seine Festnetznummer kommunizieren.

Bei Haushalten mit mehr als zwei Personen und einem analogen Festnetzanschluß können die Nummern wie folgt interpretiert werden:
- Die Festnetzrufnummer (eines Analoganschlusses) ist die Sammelnummer des Haushaltes.
- Die Mobilfunkrufnummer ist die persönliche Rufnummer des einzelnen Haushaltsmitgliedes, der zugehörige Anrufbeantworter ist der persönliche Anrufbeantworter.
- Bei ISDN-Anschlüssen können den einzelnen Haushaltsmitgliedem individuelle Festnetzrufnummern zugeordnet werden. Bei einem Standard-ISDN-Anschluß ist die Anzahl der Rufnummern aber in der Regel auf drei begrenzt. Wird zum Beispiel eine Rufnummer für ein Telefaxgerät reserviert, können die verbleibenden Rufnummern bei mehr als zwei Personen im Haushalt als Gruppennummem - zum Beispiel für Eltern und Kinder - interpretiert werden.

Für ankommende Telefongespräche wird im Festnetz und im Mobilfunknetz ein aus der Sicht des Nutzers netzübergreifender "Personal Addressing Service" mit folgendem Leistungsumfang eingerichtet:
1. Zustellung ankommender Mobilfunk-Anrufe;
2. Zustellung ankommender Festnetz-Anrufe;
3. Kurzwahlen für Haushaltsmitglieder (Familieninterne Gespräche);
4. Service-Administration durch den Nutzer;
5. Generierung von Tarifierungsinformationen.

Zur Generierung von Tarifierungsinformation wird weiter unten noch Stellung genommen.

Bei der Anwahl der Mobilfunknummern - der persönlichen Nummern des Nutzers - wird zunächst versucht, das zugehörige Mobiltelefon zu erreichen. Wenn dies nicht möglich ist, zum Beispiel wegen mangelnder Funkversorgung, Gerät ist ausgeschaltet, usw., und zwar abhängig von der Voreinstellung des Nutzers, wird entweder sofort der zugehörige Mobilfunkanrufbeantworter oder zunächst der vom Nutzer definierte Festnetzanschluß angewählt. Der Nutzer vergibt für jede Festnetznummer zunächst ein Attribut (Nummemtyp), das einen der drei Werte
1. Sammeinummer
2. Gruppennummer oder
3. individuelle Nummer
annehmen kann.

Wenn es sich bei der Festnetznummer um eine "individuelle Nummer" handelt, kann der Nutzer eine Mobilfunknummer zuordnen. Nach Anwahl der Festnetznummer werden zunächst alle angeschlossenen Telefone, und zwar inklusive Telefon im Cordless Mode, klingeln, wobei nach Ablauf einer gegebenenfalls vom Nutzer definierten Zeitspanne entweder direkt auf den persönlichen Anrufbeantworter weitergeleitet oder aber zunächst auf das Mobiltelefon und dann auf den persönlichen Anrufbeantworter weitergeschaltet wird.

Wenn es sich bei der Festnetznummer um eine Sammelnummer oder um eine Gruppennummer handelt, kann der Nutzer mehrere Mobilfunknummern hinterlegen. Der Nutzer kann jeder Mobilfunknummer eine persönliche Ansage zuordnen, zum Beispiel jeweils den Namen des Nutzers, dem die Mobilfunknummer als persönliche Rufnummer zugeordnet ist. Für jede persönliche Mobilfunknummer kann individuell festgelegt werden, ob zunächst das Mobilfunktelefon oder direkt der persönliche Anrufbeantworter angesprochen werden soll.

Wenn bei der Anwahl des Festnetzanschlusses der Anruf nicht angenommen wird, wobei die Zeit vom Benutzer festgelegt werden kann, erhält der Anrufer die Aufforderung, sich für einen individuellen Teilnehmer zu entscheiden ("Wen möchten Sie sprechen? - Drücken Sie die 1 für Eva Meier oder die 2 für Fritz Meier.").

Abhängig von den benutzerdefinierten Voreinstellungen wird der Anrufer zunächst mit dem vorher definierten Mobiltelefonanschluß oder gleich direkt mit dem zugehörigen persönlichen Anrufbeantworter verbunden.

Für die individuellen Rufnummern der Haushaltsmitglieder kann jeweils eine Kurzwahl definiert werden, die der individuellen Kommunikation zwischen Haushaltsmitgliedem dient.

Der Nutzer hat außerdem die Möglichkeit, die Service-Einstellungen entweder per Telefon-Tastatur oder per Datenkommunikation, zum Beispiel über World Wide Web (WWW), zu ändern.

Was die Tarifierung anbelangt, so kann bei abgehenden Gesprächen die Tarifierung abhängig vom aktuellen Betriebsmodus des Mobiltelefons (Cordless oder Cellular) durch die (implizierte) Wahl des Netzes geschehen.

Für ankommende Gespräche erfolgt die Tarifierung abhängig von der tatsächlichen Zielrufnummer vor dem Anrufbeantworter, unter der der Nutzer erreicht wird. Dies erfordert, daß eine Tarifinformation an das Ursprungsnetz signalisiert und dort verarbeitet werden kann. Wenn dies nicht möglich ist, zum Beispiel technisch bedingt oder weil die entsprechenden Vereinbarungen fehlen, kann - entsprechend der Voreinstellung des Nutzers - der entsprechende Gesprächsanteil entweder zu Lasten des Benutzerteilnehmers abgerechnet werden, oder der Anrufer wird mit dem persönlichen Anrufbeantworter verbunden.

Der "Personal Addressing Service" übemimmt die Bereitstellung der Tarifinformation und veranlaßt die Signalisierung in das Ursprungsnetz.

Wenn der weiterleitende Anteil dem Benutzerteilnehmer in Rechnung gestellt werden muß, erfolgt entweder eine Abfrage beim Benutzerteilnehmer, ob er die Kosten übernimmt, oder der Ruf wird direkt durchgestellt, wenn der Nutzer dies vorher so eingestellt hat.

Dual-Mode-Endgeräte lassen sich heute in der Kombination DECT/GSM (GSM 900 oder GSM 1800) realisieren. Die Cordless-Station ist in diesem Fall eine handelsübliche (GAP) DECT-Station.

In der Mobilfunkstandardisierung (ETSI-SMG) wird in 1999 das GSM Cordless Telephone System verabschiedet. Dieser Ansatz wird ebenfalls die geforderte Dual-Mode-Funktionalität herstellen.

Aus der Sicht des Nutzers soll sich das "Personal Addressing Service" als netzübergreifend präsentieren. Dies kann realisiert werden, in dem für Festnetz-und Mobilfunknetz eine gemeinsame IN-Plattform bereitgestellt wird, auf der der beschriebene Service zur Verfügung steht.

Es sind aber auch verteilte Service-Logics für die beiden Netze denkbar mit Service Control Points (SCPs) in beiden Netzen. Der Nutzer hat Zugriff auf seine Service Parameter durch einen netzübergreifenden Service-Management Access Point (SMAP).

In der Zeichnung ist die Erfindung - teils schematisch und beispielsweise - veranschaulicht. Es zeigen:
- Fig. 1: eine schematische Darstellung zur Veranschauung des Grundprinzips und
- Fig. 2: verteilte Service Logics mit SCPs und SMAP.

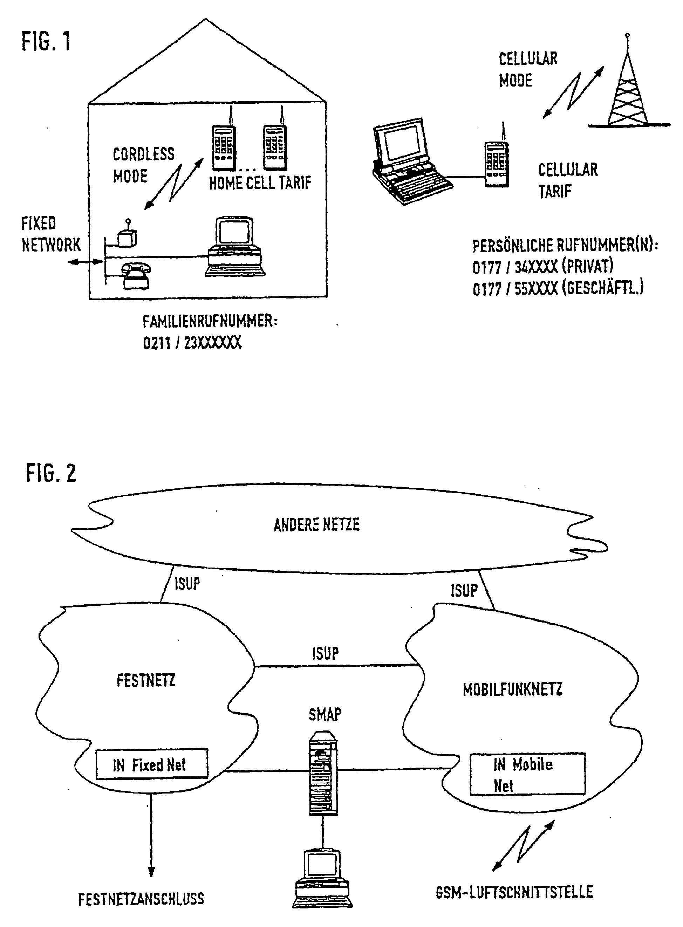

Aus Fig. 1 ist das Grundprinzip ersichtlich. In seiner Heimatzelle telefoniert der Nutzer über seinen Festnetzanschluß, unterwegs nutzt er wie gewohnt das Mobilfunknetz. Die dargestellten Telefonnummern sind als beispielsweise Angaben zu verstehen und können durch beliebige Telefonnummern ersetzt werden.

Fig. 2 zeigt verteilte Service Logics für die beiden Netze mit SCPs in beiden Netzen, wobei der Nutzer Zugriff auf seine Service Parameter durch einen netzübergreifenden Service Management Access Point (SMAP) hat.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Abkürzungsverzeichnis

- DECT/GSM: Digital Enhanced Cordless Telephone/Group Special Mobile
- ETS/SMG: European Standard Communications/Special Mobile Group
- GAP:
- IN: Intelligent Network; intelligentes Netz
- ISUP: ISDN User Part
- GSM-Luftschnittstelle: Global System for Mobile Communication
- SCP: Service Control Point
- SMAP: Service Management Access Point

## Patentansprüche

1. Verfahren zum Kombinieren von Festnetz- und Mobilfunktelefonie unter Verwendung je mindestens einer Heimatzelle, einem Festnetz und einem Mobilfunknetz, wobei von dem Nutzer ein sowohl im Cellular Mode als auch im Cordless Mode arbeitendes Dual-Mode-Endgerät benutzt wird, das automatisch bei abgehenden Gesprächen eine Verbindung über das günstigste, verfügbare Netz herstellt, wobei der Nutzer unter einer einzigen Rufnummer über einen intelligenten Follow-Me-Service erreichbar ist, der sicherstellt, daß der Nutzer jederzeit sowohl unter seiner Festnetznummer, als auch unter seiner Mobilfunknummer erreichbar ist, wobei der Nutzer frei wählen kann, welche Nummer er kommunizieren möchte, wobei durch den Nutzer für ein oder mehrere Festnetznummern ein Nummemtyp vergeben wird, der sich auf einen oder mehrere der drei Nummemtypen "Sammelnummer" oder "Gruppennummer" oder "individuelle Nummer" bezieht, wobei der Nutzer für den Fall, daß es sich um eine Festnetznummer als "individuelle Nummer" handelt, diese einer Mobilfunknummer zuordnen kann, wobei nach Anwahl der Festnetznummer zunächst alle angeschlossenen Telefone einschließlich des Cordless Mode-Endgerätes klingeln werden, während nach Ablauf einer nutzerdefinierten Zeit entweder direkt auf den persönlichen Anrufbeantworter weitergeleitet, oder zunächst auf das Mobilfunknetz und dann auf den persönlichen Anrufbeantworter weitergeschaltet wird, wobei in dem Falle, daß es sich bei der Festnetznummer um eine Sammelnummer oder um eine Gruppennummer handelt, vom Nutzer mehrere Mobilfunknummern hinterlegt werden, und daß der Nutzer jeder Mobilfunknummer eine persönliche Ansage zuordnen kann, wobei für jede persönliche Mobilfunknummer individuell festgelegt wird, ob zunächst das Mobilfunknetz oder direkt der persönliche Anrufbeantworter angesprochen wird.

2. Verfahren nach Anspruch 1, **dadurch gekennzeichnet, daß**, wenn bei Anwahl des Festnetzanschlusses der Anruf nicht angenommen wird (Zeit benutzerdefiniert), der Anrufer die Aufforderung erhält, sich für einen individuellen Teilnehmer zu entscheiden, wobei abhängig von den benutzerdefinierten Einstellungen der Anrufer zunächst mit dem vorher definierten Mobilfunktelefonanschluß, oder direkt mit dem zugehörigen persönlichen Anrufbeantworter verbunden wird.

3. Verfahren nach Anspruch 1 oder 2, **dadurch gekennzeichnet, daß** individuelle Rufnummern als Kurznummem definiert werden.

4. Verfahren nach Anspruch 1 oder einem der darauffolgenden Ansprüche, **dadurch gekennzeichnet, daß** für Festnetz und Mobilfunknetze eine gemeinsame IN-Plattform bereitgestellt wird, auf der der beschriebene Service zur Verfügung steht.

5. Verfahren nach Anspruch 1 oder einem der darauffolgenden Ansprüche, **dadurch gekennzeichnet, daß** verteilte Service-Logics für das Festnetz und für das Mobilfunknetz mit SCPs eingeschaltet werden, und daß der Nutzer Zugriff auf seinen Service-Parameter durch einen netzübergreifenden Service Management Access Point (SMAP) hat.

## Claims

1. Process for combining fixed-network and mobile telephoning using at least one home cell each, a fixed telephone network and a mobile telephone network, where the user uses a dual-mode terminal unit operating in both cellular or cordless mode, which, for outgoing calls, automatically creates a connection via the most favourable available network, where the user is available under one single number via an intelligent follow-me service, which ensures that the user can be reached at any time both under his fixed-network number and his mobile-network number, where the user can choose freely which number he wishes to communicate, where the user assigns a number type to one or several fixed-network numbers, which refers to one or several of the three number types "collective number" or "group number or individual number", where the user, in cases where this is a fixed-network number as individual number, can assign it to a mobile-telephone number, where at first all the connected telephones including the cordless-mode terminal unit will ring when the fixed-network number is dialled, and after expiry of a period of time defined by the user the call is either transferred directly to the personal answerer, or first of all to the mobile network and then to the personal answerer, where in cases where the fixed-network number is a collective number or a group number, several mobile-telephone numbers can be specified by the user and the user can assign a personal announcement to each mobile-telephone number, where for each personal mobile-telephone number it can be specified whether the mobile-telephone network or the personal answerer is contacted first.

2. Process according to claim 1, **characterised in that** when the fixed-network connection is called, and the call is not taken (time period user-defined), the caller is asked to decide in favour of a certain party, where, according to the user-defined settings, the caller is connected initially with the previously defined mobile-telephone connection or directly with the corresponding personal answerer.

3. Process according to claim 1 or claim 2, **characterised in that** the individual call numbers are defined as short numbers.

4. Process according to claim 1 or one of the following claims, **characterised in that** for fixed network and mobile-telephone networks, a joint IN platform is provided, on which the service described is made available.

5. Process according to claim 1 or one of the following claims, **characterised in that** divided service logics are switched on with SCPs for the fixed telephone network and the mobile telephone network, and that the user has access to his service parameter through an inter-network service management access point (SMAP).

## Revendications

1. Procédé destiné à combiner la téléphonie par réseau fixe avec la téléphonie par réseau mobile en utilisant pour chacune une cellule d'attache, un réseau fixe et un réseau de téléphonie mobile, sachant que l'utilisateur se sert d'un terminal bimodal fonctionnant tant en mode Portable qu'en mode Sans fil, ledit terminal établissant automatiquement pour les appels sortants une communication via le réseau disponible le plus favorable, sachant que l'utilisateur est joignable sous un numéro d'appel unique via un service intelligent faisant suivre l'appel, lequel service assure que l'utilisateur reste joignable à tout moment aussi bien à son numéro de réseau fixe qu'à son numéro de téléphonie mobile, l'utilisateur pouvant librement choisir quel numéro il souhaiterait communiquer, sachant que l'utilisateur décerne, pour un ou plusieurs numéros de réseau fixe, un type de numéro qui se réfère à l'un ou plusieurs des trois types de numéros suivants : "Numéro générique" ou "Numéro de groupe" ou "numéro individuel", sachant que l'utilisateur, dans le cas où il s'agit d'un numéro de réseau fixe sous forme de "numéro individuel", peut attribuer ce numéro à un numéro de téléphonie mobile, sachant qu'après l'appel du numéro de réseau fixe, tous les téléphones raccordés y compris le terminal en mode Sans fil vont sonner, tandis qu'après expiration d'un temps défini par l'utilisateur l'appel sera soit directement acheminé à un répondeur personnel, soit communiqué d'abord au réseau de téléphonie mobile puis au répondeur personnel, sachant que dans le cas où le numéro de réseau fixe est un numéro générique ou un numéro de groupe, l'utilisateur stocke plusieurs numéros de téléphonie mobile et que l'utilisateur peut attribuer une annonce personnelle à chaque numéro de téléphonie mobile, sachant qu'il définit, pour chaque numéro personnel de téléphonie mobile, si le correspondant passe d'abord sur le réseau de téléphonie mobile ou s'adresse directement au répondeur personnel.

2. Procédé selon la revendication 1, **caractérisé en ce que** si, lors de l'appel du numéro de réseau fixe, l'appel n'est pas pris (temps défini par l'utilisateur), l'appelant s'entend invité à choisir un autre abonné individuel, sachant que, dépendamment des réglages définis par l'utilisateur, l'appelant est dans un premier temps mis en communication avec le numéro de réseau mobile préalablement défini, ou directement en liaison avec le répondeur personnel afférent.

3. Procédé selon la revendication 1 ou 2, **caractérisé en ce que** des numéros d'appel individuels sont définis sous forme de numéros abrégés.

4. Procédé selon la revendication 1 ou l'une des revendications suivantes, **caractérisé en ce qu'**une plateforme IN conjointe, sur laquelle le service décrit est disponible, est fournie pour des réseaux fixe et mobile.

5. Procédé selon la revendication 1 ou l'une des revendications suivantes, **caractérisé en ce que** des Service-Logics distribués pour le réseau fixe et le réseau de téléphonie mobile sont enclenchés avec des SCPs, et que l'utilisateur a accès à son paramètre de service via un point d'accès à la gestion du service (Service Management Access Point (SMAP)).
